(19)

(11) **EP 2 590 798 B1**

(12) **EUROPÄISCHE PATENTSCHRIFT**

(45) Veröffentlichungstag und Bekanntmachung des Hinweises auf die Patenterteilung: **30.07.2014 Patentblatt 2014/31**

(21) Anmeldenummer: **11738149.1**

(22) Anmeldetag: **30.06.2011**

(51) Int Cl.: ***B29C 47/68*** (2006.01) ***B29C 47/08*** (2006.01) ***B01D 29/66*** (2006.01)

(86) Internationale Anmeldenummer: **PCT/AT2011/000288**

(87) Internationale Veröffentlichungsnummer: **WO 2012/003520 (12.01.2012 Gazette 2012/02)**

# (54) FILTRIERVORRICHTUNG FÜR FLUIDE

FILTERING DEVICE FOR FLUIDS

DISPOSITIF DE FILTRATION POUR FLUIDES

(84) Benannte Vertragsstaaten: **AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.07.2010 AT 11332010**

(43) Veröffentlichungstag der Anmeldung: **15.05.2013 Patentblatt 2013/20**

(73) Patentinhaber: **EREMA Engineering Recycling Maschinen und Anlagen Gesellschaft m.b.H.**
**4052 Ansfelden (AT)**

(72) Erfinder:
- **JOST, Ernst**
  **A-4055 Pucking (AT)**
- **ARBEITHUBER, Josef**
  **A-4020 Linz (AT)**
- **HACKL, Manfred**
  **A-4040 Linz-Urfahr (AT)**
- **FEICHTINGER, Klaus**
  **A-4040 Linz (AT)**

(74) Vertreter: **Wildhack & Jellinek Patentanwälte**
**Landstraßer Hauptstraße 50**
**1030 Wien (AT)**

(56) Entgegenhaltungen:
**EP-A1- 0 072 149** **EP-A1- 1 053 854**
**WO-A1-2004/002715** **DE-A1- 2 407 663**
**DE-A1- 4 212 928** **DE-A1- 10 151 496**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 590 798 B1

Printed by Jouve, 75001 PARIS (FR)

## Beschreibung

Die Erfindung betrifft eine Filtriervorrichtung für Fluide, insbesondere thermoplastische Kunststoffe, gemäß dem Oberbegriff des Patentanspruchs 1. Eine Anordnung vergleichbarer Art ist aus der DE10151496A1 bekannt.

Filtriervorrichtungen für thermoplastische Kunststoffe, die im aufgeschmolzenen Zustand vorliegen und insbesondere von recyklierten Kunststoffabfällen stammen, sind bekannt. Die Kunststoffschmelze wird dabei über Filteranordnungen geleitet, um Verunreinigungen auszufiltern. Derartige Filtriervorrichtungen besitzen eine Anzahl von Siebnestern, in denen Filteranordnungen liegen. Diese Filteranordnungen müssen von Zeit zu Zeit rückgespült und, wenn sie verstopft sind , ausgetauscht werden., um eine einwandfreie Filtration und einen einwandfreien Durchgang der Kunststoffschmelze zu erreichen.

Ziel der Erfindung ist es, eine konstruktiv einfach aufgebaute und leicht zu bedienende bzw. steuerbare Filtriervorrichtung zu erstellen, die bei entsprechend hohem Durchsatz von Kunststoffschmelze eine effektive Rückspülung der Filteranordnungen und einen raschen Austausch der Filteranordnungen gewährleistet.

Diese Ziele werden bei einer Filtriervorrichtung der eingangs genannten Art mit den im Kennzeichen des Anspruchs 1 angeführten Merkmalen erreicht.

Die Lagerung des Siebträgers auf einem feststehenden Kernteil ergibt eine stabile Basis für die Filtriervorrichtung. Da des weiteren das Gehäuse lagefest und drehfest ausgebildet ist, ist als einziger rotierender Bauteil der rotierbare Siebträger vorhanden, in dem lediglich die Siebnester und kurze Leitungsteile auszubilden sind. Die wesentlichen Leitungen und Ausnehmungen sind um die bzw. an der Außenfläche des Kernteils ausgebildet, sodass der Aufbau und die Wartung und Bedienbarkeit der Steuerung der Filtriervorrichtung vereinfacht wird. Damit kann der Siebträger eine große Anzahl von Siebnestern aufnehmen, sodass der Durchsatz von Fluid erhöht werden kann. Die Steuerung des Siebträgers ist einfach, da durch Rotation des Siebträgers um den Kernteil jedes der Siebnester in eine Filteranordnungs-Austauschstellung oder in eine Rückspülstellung verstellt werden kann, ohne dass dadurch wesentliche Betriebsunterbrechungen oder eine wesentliche Unterbrechung des Durchsatzes von Kunststoffschmelze erforderlich sind. Des weiteren sind die Durchströmwege durch die Siebnester kurz und die Wärmeverluste gering, da das Zuströmen und Abströmen der zu reinigenden Kunststoffschmelze im Inneren des Kernteils erfolgt und das Gehäuse nach außen zu für eine entsprechende Isolierung sorgt.

Es ist vorgesehen, dass in der Oberfläche des Kernteils ein Zulaufkanal für zu filtrierendes Fluid und ein Ablaufkanal für filtriertes Fluid ausgearbeitet bzw. ausgenommen sind, die sich in jeweils zueinander parallelen, senkrecht zur Rotationsachse des Kernteils verlaufenden Ebenen zumindest über einen Umfangsabschnitt, gegebenenfalls den gesamten Umfang, des Kernteils erstrecken.

Für jeden seine Funktion ausübenden Siebträger sowie für die Filterentnahme-Station und die Rückspülstation wird ein bestimmter Umfangsabschnitt zur Verfügung gestellt. Wenn des weiteren vorgesehen ist, dass im Siebträger in einer senkrecht zur Rotationssachse des Siebträgers verlaufende Ebene liegende Siebnester sowie die Mündungen ihrer Zuleitung und Ableitungen in gleichmäßigen Abständen längs des Umfangs des Siebträgers ausgebildet sind, ergibt sich ein im wesentlichen regelmäßiger bzw. symmetrischer Aufbau des Siebträgers, der damit einfach zu fertigen und zu steuern ist.

Für die Anspeisung der Siebnester ist im Siebträger für die jeweiligen Siebnester eine Zuleitung und eine Ableitung für das Fluid ausgebildet, wobei die Mündung der Zuleitungen an der Innenfläche des Siebträgers in der Ebene des Zulaufkanals und die Mündung der Ableitung an der Innenfläche des Siebträgers in der Ebene des Ablaufkanals liegen, sodass die Zuleitung mit dem Zulaufkanal und die Ableitung mit dem Ablaufkanal fluidleitend verbindbar ist. Ein einfacher Aufbau ergibt sich, wenn die Zuleitung im Siebträger zu einem radial außen gelegenen Bereich des Siebnestes bzw. der Filteranordnung geführt ist, sodass die Filteranordnung radial von außen nach innen durchströmbar ist.

Für die Durchströmung und zum Austausch der Filteranordnungen ist es von Vorteil, wenn die Siebnester jeweils von einer Ausnehmung im Siebträger gebildet sind, die sich zur Außenfläche des Siebträgers öffnet, wobei die Filteranordnungen von der Außenfläche her in die Ausnehmung eingesetzt sind und die Zuleitung in den zwischen der Filteranordnung und der Außenfläche gelegenen Freiraum bzw. Bereich seitlich einmündet und die Ableitung von dem bezüglich der Filteranordnung radial innengelegenen Bereich der Ausnehmung in Richtung auf den Kernteil abgeht.

Ein einfacher Aufbau der Zuleitung und der Ableitung für die Kunststoffschmelze liegt dann vor, wenn der Zulaufkanal über zumindest eine Verbindungsleitung an eine Versorgungsleitung und der Ablaufkanal über zumindest eine Verbindungsleitung an eine Sammelleitung angeschlossen ist, wobei gegebenenfalls die Versorgungsleitung und die Sammelleitung von gegenüberliegenden Stirnflächen des Kernteils her zentrisch in den Kernteil eingearbeitet bzw. eingeführt sind.

Ein einfacher Aufbau einer Station am Gehäuseumfang zum Austausch von Filteranordnungen wird erreicht, wenn in zumindest einem Umfangsabschnitt des Gehäuses eine mit einem Deckel verschließbare Entnahmeöffnung zur Entnahme einer in einem Siebnest befindlichen Filteranordnung und in zumindest einem weiteren Umfangsabschnitt (U2) des Gehäuses (3) eine mit einem Ventil absperrbare Ausgangsleitung ausgebildet ist.

Ein funktional und konstruktiv einfacher Aufba einer Station für die Rückspülung bzw. den Austausch eines Siebnestes wird dadurch erreicht, daß der Entnahmeöffnung und/oder der Ausgangsleitung und/oder der Mündung der Zuleitung und der Ableitung gegenüberliegende Umfangsabschnitte des Kernteits frei von Abschnitten des Zulaufkanals und/oder Ablaufkanals sind, oder daß in einem Umfangsabschnitt des Kernteils, welcher Umfangsabschnitt frei von Abschnitten des Zulaufkanals und/oder Ablaufkanals ist, eine von der Versorgungsleitung abgezweigte Zufuhrleitung zur Oberfläche des Kernteils geführt ist, die mit einem ersten Ventil absperrbar oder freigebbar ist und deren Mündung in der Ebene des Zulaufkanals liegt, die somit an die Zuleitung anschließbar ist und daß im Kernteil eine von der Sammelleitung abgehende und mit einem zweiten Ventil absperrbare oder freigebbare Spülleitung zur Oberfläche des Kernteils geführt ist, wobei die Mündung der Spülleitung in der Ebene des Ablaufkanals liegt, die somit an die Ableitung des Siebnestes anschließbar ist.

Um eine definierte und wirksame Rückspülung zu erreichen ist vorgesehen, dass an die Spülleitung zwischen Ihrer Mündung und dem zweiten Ventil eine Stichleitung angeschlossen ist, die zu einer Saug-Druck-Pumpe, vorzugsweise eine reziprokierende Kolbenpumpe, geführt ist, wobei der Arbeitsraum der Pumpe an einen Speicher für filtriertes Fluid angeschlossen ist, welcher Speicher über die Spülleitung und das Ventil mit der Filtratseite bzw. der Sammelleitung in Verbindung steht. Die Pumpe drückt das vom Speicher angesaugte Filtrat durch die Filteranordnung. Damit kann bei Bedarf auch eine mehrfache Rückspülung ein und desselben Siebnestes vorgenommen und durch Wahl des Druckprofiles, insbesondere der Höhe, des Druckes der Pumpe unterschiedlich starken Verstopfungen Rechnung getragen werden. Das Filtrat kann z.B. mit ansteigendem Druck oder ausgehend von einem hohen Anfangsdruck mit abfallendem Druck oder in Form von Stoßwellen zur Spülung eingesetzt bzw. durch die Filteranordnung durchgedrückt werden.

Ein konstruktiv einfacher Aufbau ergibt sich, dadurch, daß die im Siebträger in einer senkrecht zur Rotationssachse des Siebträgers verlaufende Ebene liegende Siebnester sowie die Mündungen ihrer Zuleitungen und Ableitungen in gleichmäßigen Abständen längs des Umfangs des Siebträgers ausgebildet sind und/oder daß die Mündungen der Zuleitungen und der Ableitungen jeweils auf einer Erzeugenden der Innenfläche des Siebträgers liegen und ihr Abstand voneinander längs dieser Erzeugenden dem Abstand zwischen dem Zulaufkanal und dem Ablaufkanal längs einer Erzeugenden des Kernteils entspricht.

Ein Austreten von Kunststoffschmelze wird vermieden, wenn vorgesehen ist, dass der Siebträger fluiddicht auf dem Kernteil und im Gehäuse gelagert ist.. Durch Ausbildung eines exakten Sitzes bzw. exakter gegenseitiger Passungen von Siebträger, Kernteil und Gehäuse können Dichtungsmaßnahmen minimiert werden. Für die Herstellung und vom Aufbau her ist es einfach, wenn die Stichleitung zur Saug-Druck-Pumpe und das zweite Ventil in einem aus dem Gehäuse und aus dem Siebkörper herausragenden Abschnitt des Kernteils gelegen sind.

Die Erfindung wird im Folgenden anhand der Zeichnung beispielsweise näher erläutert. Fig. 1 und 2 zeigen einander zugeordnete Schnitte durch eine erfindungsgemäße Filtrieranordnung. Fig. 3, 4, 5 und 6 zeigen jeweils einander zugeordnete Längs- und Querschnitte von erfindungsgemäßen Filtriervorrichtungen zur Erläuterung der Rückspülung von Siebnestern. Fig. 7 und 8 zeigen einen Längs- und einen Querschnitt einer erfindungsgemäßen Filtriervorrichtung in Entnahmestellung des Siebträgers zur Erläuterung des Austausches von Filteranordnungen.

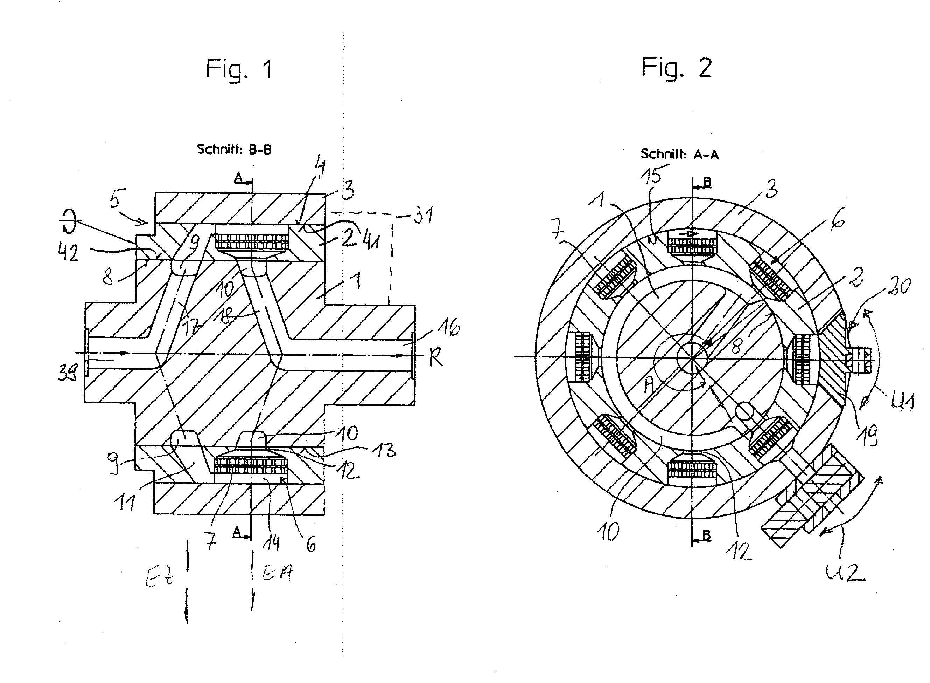

Fig. 1 zeigt einen schematischen Längsschnitt durch eine erfindungsgemäße Filtriervorrichtung. Derartige Filtriervorrichtungen werden insbesondere zum Filtrieren von Kunststoffschmelzen eingesetzt, die zur Wiederaufbereitung von recyklierten Kunststoffabfällen verwendet werden. Derartige Kunststoffabfälle enthalten viele Fremdstoffe, die vor der Granulierung oder direkten Weiterverarbeitung der Kunststoffschmelze abgeschieden werden müssen.

Eine erfindungsgemäße Filtriervorrichtung umfasst einen Kernteil 1, der auf einem nur angedeuteten Gestell 31 orts- und drehfest gelagert ist. Auf diesem rotationszylindrisch gestalteten Kernteil 1 ist unmittelbar bzw. direkt ein Siebträger 2 rotierbar gelagert, der rotationszylinderringförmige Gestalt besitzt. Direkt umgeben wird der Siebträger 2 von einem Gehäuse 3, das eine rotationszylindrische Innenfläche 4 besitzt. Das Gehäuse 3 ist ebenfalls orts- und drehfest in dem Gestell 31 gelagert. Somit sind, wie mit 31 angedeutet, das Gehäuse 3 und der Kernteil 1 statisch feststehend ausgebildet und der Siebträger 2 ist relativ zum Gehäuse 3 und zum Kernteil 1 rotierbar. Der Siebträger 2 ist in der Ausnehmung 5 des Gehäuses 3 dicht gelagert bzw. geführt. Auch die Innenfläche 42 des Siebträgers 2 ist gegenüber der Umfangsfläche 8 des Kernteiles 1 gedichtet. Eine Abdichtung kann auch mittels Dichtringen erfolgen. Auf diese Weise wird ein Austreten von Kunststoffschmelze aus den Kanälen bzw. Übergängen vom Kernteil 1 zum Siebträger 2 bzw. aus dem Spalt zwischen Siebträger 2 und Gehäuse 3 vermieden.

Im Siebträger 2 ist eine Anzahl von Siebnestern 6 ausgebildet. Wie aus Fig. 2 ersichtlich ist, sind bei dieser Ausführungsform im Siebträger 2 acht Siebnester 6 angeordnet, die jeweils unter gleichen Winkelabständen bezüglich der Rotationsachse R des Siebträgers 2 angeordnet sind. Der Siebträger 2 kann bezüglich der Siebnester 6 und der in diesen Siebnestern gelegenen Filteranordnungen 7 symmetrisch gestaltet sein.

Im Kernteil 1 ist eine Versorgungsleitung 39 für die Zufuhr von zu filtrierender Kunststoffschmelze ausgenommen, die über eine Verbindungsleitung 17 zu einem Zulaufkanal 9 geführt ist, der sich ringförmig zumindest über einen Abschnitt A des Umfangs des Kernteiles 1 in der Oberfläche 8 des Kernteils 1 erstreckt.

In der gegenüberliegenden Stirnseite liegt die Mündung einer Sammelleitung 16, die über eine Verbindungsleitung 18 mit einem Ablaufkanal 10 verbunden ist, der sich parallel zum Zulaufkanal 9 zumindest über einen Abschnitt A des Umfangs des Kernteiles 1 in der Oberfläche 8 des Kernteiles 1 erstreckt. Der Zulaufkanal 9 liegt in einer Ebene EZ, die senkrecht zur Rotationsachse R des Siebträgers 2 verläuft. Der Ablaufkanal 10 liegt in einer Ebene EA, die ebenfalls senkrecht zur Rotationsachse R des Siebträgers 2 verläuft.

Aus Fig. 2 ist zu erkennen, dass in der Oberfläche 8 des Kernteils 1 der Zulaufkanal 9 für zu filtrierendes Fluid und der Ablaufkanal 10 für filtriertes Fluid ausgearbeitet bzw. ausgenommen sind und sich in jeweils zueinander parallelen, senkrecht zur Rotationsachse des Kernteils 1 verlaufenden Ebenen EZ, EA über einen Umfangsabschnitt oder auch über den gesamten Umfang des Kernteils 1 erstrecken können.

Bei einer speziellen Ausführungsform der Erfindung kann vorgesehen sein, dass bei Ausbildung von zumindest drei Siebnestern 6 sich der Zulaufkanal 9 und der Ablaufkanal 10 über einen Zentriwinkelbereich A der Umfangsfläche 8 des Kernteils 1 erstrecken, für den gilt:

$$\frac{360(n-2)}{n} > A > \frac{360(n-3)}{n},$$

wobei n der Anzahl der vorhandenen Siebnester 6 entspricht.

Im Siebträger 2 ist für eine vorgegebene Anzahl, vorzugsweise für jedes, der Siebnester von einer Ausnehmung im Siebträger 2 gebildeten eine Zuleitung 11 ausgebildet, die von der Innenwandfläche 13 des Siebträgers 2 zu einem radial außenliegendem Bereich 14 der Ausnehmung im Siebträger 2 geführt ist, in welcher Ausnehmung eine Filteranordnung 7 gelagert ist. Von dieser Ausnehmung geht eine Ableitung 12 in Richtung auf den Kernteil 1 bzw. den Ablaufkanal 10 ab. Die Zuleitung 11 und die Ableitung 12 besitzen einen Abstand längs der Erzeugenden der Innenwandfläche des Siebträgers 2, der dem Abstand zwischen der Zuleitungsebene EZ und der Ableitungsebene EA entspricht. Alle Abstände werden von den Mittelebenen bzw. -punkten der entsprechenden Kanäle bzw. deren Mündungen bemessen.

Es ist somit aus Fig. 1 und 2 zu erkennen, dass über die Versorgungsleitung 15 zugeführte Schmelze in den Zulaufkanal 9 eintritt und sich dort über den Umfangsabschnitt A des Zulaufkanals 9 verteilt. Aus diesem Zulaufkanal 9 tritt die Kunststoffschmelze in die jeweiligen Zuleitungen 11 der Siebnester 6 ein und durchdringt die Filteranordnung 7 vom äußeren Bereich 14 in radialer Richtung zum Kernteil 1 und tritt über die Ableitung 12 in den Ablaufkanal 10, der über die Verbindungsleitung 18 mit der Sammelleitung 16 verbunden ist. Prinzipiell ist es auch möglich, die Strömungsrichtung umzukehren, womit aber ein größerer baulicher Aufwand für das Rückspülen erforderlich wäre.

Aus Fig. 2 ist des weiteren zu erkennen, dass im Siebträger 2 acht in einer senkrecht zur Rotationsachse R des Siebträgers 2 verlaufenden Ebene liegende Siebnester 6 ausgebildet sind. Von diesen acht Siebnestern 6 stehen bei der vorliegenden Ausführungsform sieben zur Reinigung der Kunststoffschmelze zur Verfügung. Eine Filtration der Schmelze ist in der Station bzw. Wechsel der Filteranordnung im dargestellten Fall nicht vorgesehen.

Eines der Siebnester 6 befindet sich im Betrieb der Filtervorrichtung in einer Position bzw. in einem Umfangsabschnitt, in dem ein Siebwechsel, das heißt ein Austausch der Filteranordnung 7 vorgenommen werden kann. Dieser Umfangsabschnitt des Gehäuses 3 bzw. des Siebträgers 2 bzw. des Kernteils 1 ist mit U1 bezeichnet. Ein weiterer Umfangsabschnitt U2 des Gehäuses 3, des Siebträgers 2 bzw. des Kernteils 1 ist ebenfalls speziell gestaltet und in dieser Position ist eine Rückspülung eines Siebnestes 6 bzw. der darin befindlichen Filteranordnung 7 möglich. Erfolgt in dieser Station keine Rückspülung, so kann das in dieser Position befindliche Siebnest 6 zur Filtrierung von Kunststoffschmelze eingesetzt werden. Für die Möglichkeit, auch in der Rückspülstation eine Reinigung des Fluids vornehmen zu können, sind mit Ventilen 22, 24 absperrbare Leitungen 21, 25 vorgesehen. Prinzipiell können längs des Umfanges des Siebringes 2 auch mehrere Stationen zum Siebwechseln oder für ein Rückspülen ausgebildet sein.

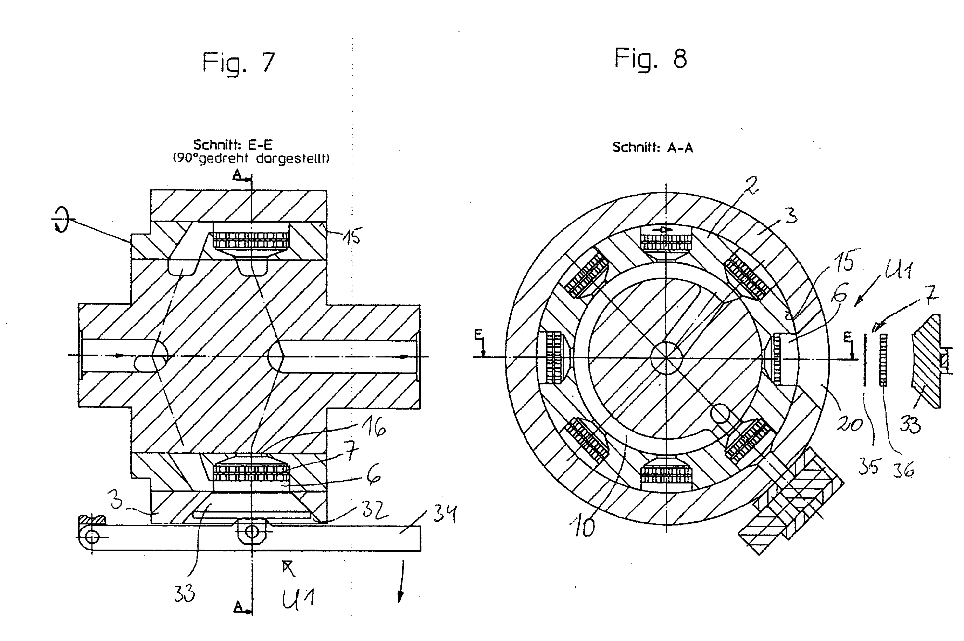

In Fig. 7 ist ein Längsschnitt durch ein Siebnest 6 dargestellt, das sich im Umfangsabschnitt U1 befindet, in welcher Position ein Austausch der Filteranordnung 7 möglich ist. Im Gehäuse 3 ist eine Ausnehmung 32 ausgebildet, durch die ein Zugang zum Siebnest 6 möglich ist. Diese Ausnehmung ist mit einem Deckel 33 verschließbar, welcher Deckel 33 über einen Verschlusshebelmechanismus bzw. Hebel 34 verstellbar bzw. in Verschlussposition verbringbar ist.

In Fig. 8 ist zu erkennen, dass die Filteranordnung 7 von einem Filterträger 35 und einem von diesem getragenen Filter 36 gebildet ist, die in das Siebnest 6 einsetzbar sind.

Es ist vorteilhaft, wenn der der Entnahmeöffnung 20 und der Mündung der Zuleitung 11 und der Ableitung 12 gegenüberliegende Umfangsabschnitt U1 des Kernteils 2 frei von Abschnitten des Zulaufkanals 9 und/oder Ablaufkanals 10 ist. Damit ist Vorsorge getroffen, dass Kunststoffschmelze beim Wechseln der Filteranordnung 7 bzw. beim Wechseln des Filters 36 nicht austreten kann bzw. das Siebnest 6 beim Austausch drucklos ist. Prinzipiell könnte dies auch erreicht werden, indem in den Leitungen 11, 25 Absperrventile oder -schieber eingesetzt sind.

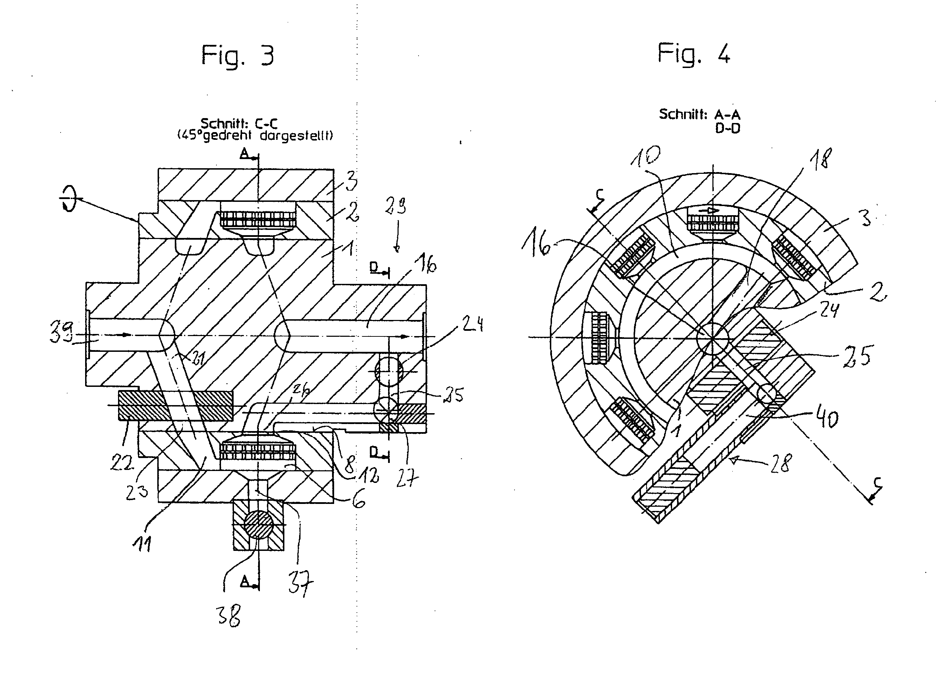

In Fig. 3 ist der Umfangsabschnitt U2 mit der Rückspülstation näher dargestellt. In diesem Umfangsabschnitt U2 besitzt das Gehäuse 3 eine mit einem Ventil 38 versperrbare Ausgangsleitung 37, die in den radialaußenliegenden Bereich 14 des Siebnestes 6 mündet.

Von der Versorgungsleitung 39 geht eine Zufuhrleitung 21 ab, die mit einem ersten Ventil 22 freigebbar oder absperrbar ist. Diese Zufuhrleitung 21 mündet in der Zuleitungsebene EZ an der Oberfläche 8 des Kernteils 1 und führt die Kunststoffschmelze in die Zuleitung 11 des Siebnestes 6. Von der Sammelleitung 16 zweigt eine Spülleitung 25 ab, in der ein zweites Ventil 24 liegt, mit dem die Spülleitung 25 von der Sammelleitung 16 abtrennbar oder an diese anschließbar ist. Die Spülleitung 25 ist im Kernteil 1 bis zu ihrer Mündung 26 in der Oberfläche 8 des Kernteils 1 geführt. Die Mündung 26 liegt in der Ableitungsebene EA und korrespondiert mit der Ableitung 12.

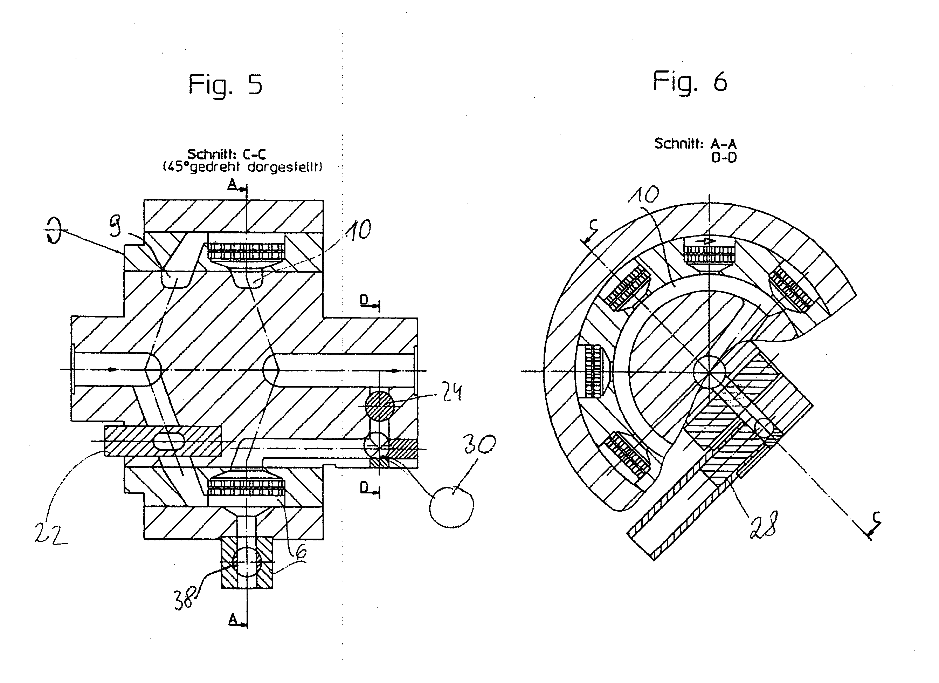

An die Spülleitung 25 ist eine Leitung 27 angeschlossen, die zu einem Schmelzespeicher 30 geführt ist. Dieser Schmelzespeicher 30 ist über die Spülleitung 25 bei offenem zweiten Ventil 24 mit gereinigter bzw. filtrierter Kunststoffschmelze befüllbar. An diesen Schmelzespeicher 30 ist eine Pumpe 28, vorzugsweise eine Kolbendruck- bzw. -saug-pumpe, angeschlossen, mit der die Kunststoffschmelze bei geschlossenem zweiten Ventil 24 durch die Spülleitung 25 und ihre Mündung 26 von der radial-innenliegenden Seite der Filteranordnung 7 durch diese Filteranordnung 7 durchdrückbar ist. Dabei ist, wie in Fig. 5 dargestellt, dass erste Ventil 22 geschlossen und das dritte Ventil 38 in Offenstellung. Damit kann die mit der Pumpe 28 geförderte Kunststoffschmelze die Filteranordnung 7 entgegen der ansonsten vorgesehenen Filterrichtung durchströmen und kann die dabei von der Filteranordnung 7 abgelösten Verunreinigungen durch die Ausgangsleitung 37 aus dem Siebnest 6 austragen.

Sind das erste Ventil 22 in Offenstellung, das zweite Ventil 24 in Offenstellung und das dritte Ventil 38 in Sperrstellung, so strömt zu filtrierende Kunststoffschmelze über die Leitung 21, die Filteranordnung 7 sowie die Stichleitung 25 in die Sammelleitung 16, sodass jedes sich im Umfangsabschnitt U2 befindliche Siebnest 6 aufzubereitenden Kunststoffschmelze filtrieren kann.

Es kann vorgesehen sein, dass in einem Umfangsabschnitt U2 des Kernteils 2, welcher Umfangsabschnitt U2 frei von Abschnitten des Zulaufkanals 9 und/oder Ablaufkanals 10 ist, eine von der Versorgungsleitung 39 abgezweigte Zufuhrleitung 21 zur Oberfläche 8 des Kernteils 1 geführt ist, die mit einem ersten Ventil 22 absperrbar oder freigebbar ist und deren Mündung 23 in der Ebene EZ des Zulaufkanals 9 liegt, die somit an die Zuleitung 11 anschließbar ist. Im Kernteil 1 ist eine von der Ableitung 16 abgehende und mit einem zweiten Ventil 24 absperrbare oder freigebbare Spülleitung 25 zur Oberfläche 8 des Kernteils 1 geführt ist, wobei die Mündung 26 der Spülleitung 25 in der Ebene EA des Ablaufkanals 10 liegt, die somit an die Ableitung 12 anschließbar ist.

Wie aus Fig. 3 hervorgeht ist es baulich zweckmäßig, wenn die Stichleitung 27 zur Saug-Druck-Pumpe 28 und das zweite Ventil 24 in einem aus dem Gehäuse 3 und aus dem Siebkörper 2 herausragenden Abschnitt 29 des Kernteils 1 gelegen sind.

In Fig. 3 ist das unten liegende Siebnest in Filtrierstellung dargestellt. In Fig. 5 ist dieses Siebnest bei seiner Rückspülung dargestellt. Entsprechend sind die Stellungen der Ventile 22, 24 und 38. Üblicherweise verbleiben die Siebnester 6 bzw. verbleibt der Siebträger 2 solange in ein und derselben Position im Gehäuse 1, als ein Rückspülen eines Siebnestes 6 bzw. ein Austausch einer Filteranordnung 7 nicht erforderlich wird. Es kann durchaus vorgesehen sein, dass in regelmäßigen Zeitabständen die Filteranordnungen 7 ausgetauscht werden bzw. dass die einzelnen Filteranordnungen 7 der Reihe nach rückgespült werden. Eine Rotation des Siebträgers 2 erfolgt vorteilhafterweise nur bei Bedarf und um einen Winkel derart, dass die Zuleitungen 11 und Ableitungen 12 der einzelnen Siebnester mit den entsprechenden Kanälen 9. 10 und deren Mündungen im Kernteil 1 in der jeweiligen Winkellage des Siebnestes 6 korrespondieren.

Es ist zweckmäßig, wenn die Mündungen der Zuleitung 11 und der Ableitung 12 längs einer Erzeugenden der Innenmantelfläche 42 des Siebträgers 2 liegen. Es kann durchaus auch vorgesehen sein, dass die Mündungen der Zuleitung 11 und der Ableitung 12 oder Siebnester 6 in Umfangsrichtung des Siebträgers 2 gegeneinander versetzt sind. Es ist lediglich Sorge dafür zu tragen, dass in jeder Arbeitsposition eines Siebnestes 6 eine entsprechende Überströmungsmöglichkeit vom Zulaufkanal 9 her in das Siebnest 6 bzw. von diesem in den Ablaufkanal 10 möglich ist. Wesentlich ist allerdings eine exakte Positionierung des Siebträgers 2 bzw. der Siebnester 6 für den Fall, dass eine Rückspülung einer Filteranordnung 7 oder deren Austausch vorgenommen werden soll.

**Patentansprüche**

1. Filtriervorrichtung für Fluide, insbesondere thermoplastische Kunststoffe, umfassend einen eine rotationszylindrische Außenfläche (41) aufweisenden Siebträger (2), der in einer an seinen Umfang angepassten rotationszylindrischen Ausnehmung (5) eines feststehenden Gehäuses (3) rotierbar gelagert ist und in dem längs seines Umfangs eine Anzahl von Filteranordnungen (7) aufweisenden Siebnestern (6) ausgebildet ist, wobei der Siebträger (2) von einem rotationszylindrischen Kernteil (1) durchsetzt und auf diesem rotierbar gelagert ist, wobei der Kernteil (1) und das Gehäuse (3) gegenüber dem rotierbaren Siebträger (2) feststehend und drehfest ausgebildet sind, **dadurch gekennzeichnet,**

   - **dass** in der Oberfläche (8) des Kernteils (1) der Zulaufkanal (9) für zu filtrierendes Fluid und der Ablaufkanal (10) für filtriertes Fluid ausgearbeitet oder ausgenommen sind, die sich in jeweils zueinander parallelen, senkrecht zur Rotationsachse des Kernteils (1) verlaufenden Ebenen (EZ, EA) zumindest über einen Umfangsabschnitt, gegebenenfalls den gesamten Umfang, des Kernteils (1) erstrecken, und
- **dass** die Zuleitung (11) und die Ableitung (12) für das Fluid für die jeweiligen Siebnester (6) im Siebträger (2) ausgebildet sind, wobei die Mündung der Zuleitung (11) an der Innenfläche (13) des Siebträgers (2) in der Ebene (EZ) des Zulaufkanals (9) und die Mündung der Ableitung (12) an der Innenfläche (13) des Siebträgers (2) in der Ebene (EA) des Ablaufkanals (10) liegen, sodass die Zuleitung (11) mit dem Zulaufkanal (9) und die Ableitung (12) mit dem Ablaufkanal (10) fluidleitend verbindbar ist.

**2.** Filtriervorrichtung nach Anspruch 1, **dadurch gekennzeichnet, dass** die Zuleitung (11) und die Ableitung (12) von der Innenwandfläche der Ausnehmung (5) begrenzt sind.

**3.** Filtriervorrichtung nach Anspruch 1 oder 2, **dadurch gekennzeichnet, dass** die Zuleitung (11) im Siebträger (2) zu einem radial außen gelegenen Bereich (14) des Siebnestes (6) oder der Filteranordnung (7) geführt ist, sodass die Filteranordnung (7) radial von außen nach innen durchströmbar ist.

**4.** Filtriervorrichtung nach einem der Ansprüche 1 bis 3, **dadurch gekennzeichnet, dass** die einzelnen Siebnester (6) von einer Ausnehmung im Siebträger (2) gebildet sind, die sich zur Außenfläche (15) des Siebtragers (2) öffnet, wobei die Filteranordnungen (7) von der Außenfläche (15) her in die Ausnehmung eingesetzt sind und in den zwischen der Filteranordnung (7) und der Außenfläche (15) gelegenen Freiraum bzw. Bereich (14) die Zuleitung (11) seitlich einmündet und von dem bezüglich der Filteranordnung (7) radial innengelegenen Bereich der Ausnehmung die Ableitung (12) in Richtung auf den Kernteil (1) abgeht.

**5.** Filtriervorrichtung nach einem der Ansprüche 1 bis 4, **dadurch gekennzeichnet, dass** der Zulaufkanal (9) über zumindest eine Verbindungsleitung (17) an eine Versorgungsleitung (39) und der Ablaufkanal (10) über zumindest eine Verbindungsleitung (18) an eine Sammelleitung (16) angeschlossen ist, wobei vorteilhafterweise die Versorgungsleitung (39) und die Sammelleitung (16) von gegenüberliegenden Stirnflächen des Kernteils (1) her zentrisch in den Kernteil (1) eingearbeitet oder eingeführt sind.

**6.** Filtriervorrichtung nach einem der Ansprüche 1 bis 5, **dadurch gekennzeichnet, dass** in zumindest einem Umfangsabschnitt (U1) des Gehäuses (3) eine mit einem Deckel (33) verschließbare Entnahmeöffnung (20) zur Entnahme einer in einem Siebnest (6) befindlichen Filteranordnung (7) und in zumindest einem weiteren Umfangsabschnitt (U2) des Gehäuses (3) eine mit einem Ventil (38) absperrbare Ausgangsleitung (37) ausgebildet ist.

**7.** Filtriervorrichtung nach Anspruch 6, **dadurch gekennzeichnet,**

- **dass** der Entnahmeöffnung (20) und/oder der Ausgangsleitung (37) und/oder der Mündung der Zuleitung (11) und der Ableitung (12) gegenüberliegende Umfangsabschnitte (U1, U2) des Kernteils (2) frei von Abschnitten des Zulaufkanals (9) und/oder Ablaufkanals (10) sind, oder
- **dass** in einem Umfangsabschnitt (U1, U2) des Kernteils (2), welcher Umfangsabschnitt (U1, U2) frei von Abschnitten des Zulaufkanals (9) und/oder Ablaufkanals (10) ist, eine von der Versorgungsleitung (39) abgezweigte Zufuhrleitung (21) zur Oberfläche (8) des Kernteils (1) geführt und mit einem ersten Ventil (22) absperrbar oder freigebbar ist, deren Mündung (23) in der Ebene (EZ) des Zulaufkanals (9) liegt und somit an die Zuleitung (11) anschließbar ist und dass im Kernteil (1) eine von der Sammelleitung (16) abgehende und mit einem zweiten Ventil (24) absperrbare oder freigebbare Spülleitung (25) zur Oberfläche (8) des Kernteils (1) geführt ist, wobei die Mündung (26) der Spülleitung (25) in der Ebene (EA) des Ablaufkanals (10) liegt und somit an die Ableitung (12) des Siebrestes (2) anschließbar ist.

**8.** Filtriervorrichtung nach Anspruch 7, **dadurch gekennzeichnet, dass** an die Spülleitung (25) zwischen Ihrer Mündung (26) und dem zweiten Ventil (24) eine Stichleitung (27) angeschlossen ist, die zu einer Saug-Druck-Pumpe (28), vorzugsweise eine reziprokierende Kolbenpumpe, geführt ist, wobei der Arbeitsraum (40) der Pumpe (28) an einen Schmelzespeicher (30) für filtriertes Fluid angeschlossen ist, welcher Schmelzespeicher (30) über die Spülleitung (25) und das Ventil (24) mit der Sammelleitung (16) in Verbindung steht.

**9.** Filtriervorrichtung nach Anspruch 8, **dadurch gekennzeichnet, dass** die Stichleitung (27) zur Saug-Druck-Pumpe (28) und das zweite Ventil (24) in einem aus dem Gehäuse (3) und aus dem Siebkörper (2) herausragenden Abschnitt (29) des Kernteils (1) gelegen sind.

**10.** Filtriervorrichtung nach einem der Ansprüche 1 bis 9, **dadurch gekennzeichnet, dass** der Siebträger (2) fluiddicht auf dem Kernteil (1) und im Gehäuse (3) gelagert ist.

**11.** Filtriervorrichtung nach einem der Ansprüche 1 bis 10, **dadurch gekennzeichnet, dass** die in einer senkrecht zur Rotationssachse des Siebträgers (3) verlaufenden Ebene liegenden Siebnester (6) sowie die Mündungen ihrer Zuleitungen (11) und Ableitungen (12) in gleichmäßigen Abständen längs des Umfangs des Siebträgers (2) ausgebildet sind.

**12.** Filtriervorrichtung nach einem der Ansprüche 1 bis 11, **dadurch gekennzeichnet, dass** die Mündungen der Zuleitungen (11) und der Ableitungen (12) jeweils auf einer Erzeugenden der Innenfläche (13) des Siebträgers (2) liegen und der Abstand voneinander längs dieser Erzeugenden dem Abstand zwischen dem Zulaufkanal (9) und dem Ablaufkanal (10) längs einer Erzeugenden des Kernteils (1) entspricht.

**13.** Filtriervorrichtung nach einem der Ansprüche 1 bis 12, **dadurch gekennzeichnet, dass** das Gehäuse (3) rotationszylinderringförmige Gestalt besitzt.

**14.** Filtriervorrichtung nach einem der Ansprüche 1 bis 13, **dadurch gekennzeichnet, dass** der Umfangsabschnitt (U1) des Kernteils (1) und des Gehäuses (3) für den Austausch der Filteranordnungen (7) und der Umfangsabschnitt (U2) des Kernteils (1) und des Gehäuses (3) für die Rückspülung der Filteranordnungen (7) nebeneinander längs des Umfangs des Kernteils (1) bzw. des Gehäuses (3) gelegen sind.

**15.** Filtriervorrichtung nach einem der Ansprüche 1 bis 14, **dadurch gekennzeichnet, dass** bei Ausbildung von zumindest drei Siebnestern (6) sich der Zulaufkanal (9) und der Ablaufkanal (10) über einen Zentriwinkelbereich (A) der Umfangsfläche (8) des Kernteils (1) erstrecken, für den gilt: $\frac{360(n-2)}{n} > A > \frac{360(n-3)}{n}$, wobei n der Anzahl der vorhandenen Siebnester (6) entspricht.

## Claims

**1.** A filtering apparatus for fluids, in particular thermoplastic plastics, comprising a screen carrier (2) having a rotary-cylindrical outer surface (41), which screen carrier (2) is rotatably supported in a rotary-cylindrical recess (5) of a stationary housing (3) fitted to its circumference and in which a number of screen cavities (6) having filter arrangements (7) are formed along its circumference, the screen carrier (2) being interspersed with, and rotatably supported on, a rotary-cylindrical core part (1), the core part (1) and the housing (3) being arranged stationary and rotation-proof with respect to the rotatable screen carrier (2), **characterized in that**, in the surface (8) of the core part (1), that the influx channel (9) for fluid to be filtered and that discharge channel (10) for filtered fluid are gouged or recessed, which extend in mutually parallel planes (EZ, EA) perpendicular to the rotation axis of the core part (1) at least over one circumferential portion, and optionally the entire circumference, of the core part (1), and **in that** the influx line (11) and the discharge line (12) for the fluid are formed for the respective screen cavities (6) within the screen carrier (2), the mouth of the influx line (11) being located on the inner surface (13) of the screen carrier (2) in the plane (EZ) of the influx channel (9) and the mouth of the discharge line (12) being located on the inner surface (13) of the screen carrier (2) in the plane (EA) of the discharge channel (10), such that the influx line (11) can be connected to the influx channel (9), and the discharge line (12) to the discharge channel (10), in a fluid-directing manner.

**2.** The filtering apparatus of Claim 1, **characterized in that** the influx line (11) and the discharge line (12) are limited by the inner wall surface of the recess (5).

**3.** The filtering apparatus of Claim 1 or 2, **characterized in that** the influx line (11) in the screen carrier (2) is directed to an area (14) located radially outside of the screen cavity (6) or the filter arrangement (7), such that the filter arrangement (7) can be radially flown through from the outside to the inside.

**4.** The filtering apparatus of any one of Claims 1 to 3, **characterized in that** the individual screen cavities (6) are formed by a recess in the screen carrier (2), which opens towards the outer surface (15) of the screen carrier (2), the filter arrangements (7) being inserted into the recess from the outer surface (15) and the influx line (11) laterally flowing into the space, or area (14), located between the filter arrangement (7) and the outer surface (15) and the discharge line (12) extending towards the core part (1) from that area of the recess positioned radially inwards in relation to the filter arrangement (7).

**5.** The filtering apparatus of any one of Claims 1 to 4, **characterized in that** the influx channel (9) is connected to a supply line (39) via at least one connecting line (17) and the discharge channel (10) is connected to a collecting line (16) via at least one connecting line (18), the supply line (39), and the collecting line (16) advantageously being centrically incorporated or introduced into the core part (1) from opposite end faces of the core part (1).

**6.** The filtering apparatus of any one of Claims 1 to 5, **characterized in that** a removal opening (20) that can be sealed with a lid (33) for removing a filter arrangement (7) located in a screen cavity (8) is formed in at least one circumferential section (U1) of the housing (3) and an exit line (37) that can be locked using a valve (38) is formed in at least one other circumferential section (U2) of the housing (3).

**7.** The filtering apparatus of Claim 6, **characterized in that**
the circumferential sections (U1, U2) of the core part (2) located opposite the removal opening (20) and/or the exit line (37) and/or the mouth of the influx line (11) and the discharge line (12) are free of sections of the influx channel (9) and/or the discharge channel (10); or **in that**
in a circumferential section (U1, U2) of the core part (2), which circumferential section (U1, U2) is free of sections of the influx channel (9) and/or the discharge channel (10), a feeding line (21) branched off of the supply line (39) is directed to the surface (8) of the core part (1) and can be locked or released using a first valve (22), the mouth (23) of which is located in the plane (EZ) of the influx channel (9) and can therefore be connected to the influx line (11) and **in that**, in the core part (1), a purge line (25), which extends from the collecting line (16) an can be sealed or released using a second valve (24), is directed to the surface (8) of the core part (1), the mouth (26) of the purge line (25) being located in the plane (EA) of the discharge channel (10) and therefore being connectable to the discharge line (12) of the screen carrier (2).

**8.** The filtering apparatus of Claim 7, **characterized in that** a stub line (27) is connected to the purge line (25) between its mouth (26) and the second valve (24), the stub line (27) being directed to a suction pressure pump (28), preferably a reciprocating piston pump, the workspace (40) of the pump (28) being connected to a melt reservoir (30) for filtered fluid, which melt reservoir (30) is in connection with the collecting line (18) via the purge line (25) and the valve (24).

**9.** The filtering apparatus of Claim 8, **characterized in that** the stub line (27) leading to the suction pressure pump (28) and the second valve (24) are located on a section (29) of the core part (1) that protrudes from the housing (3) and the screen body (2).

**10.** The filtering apparatus of any one of Claims 1 to 9, **characterized in that** the screen carrier (2) is supported on the core part (1) and in the housing (3) in a fluidtight manner.

**11.** The filtering apparatus of any one of Claims 1 to 10, **characterized in that** screen cavities (6), which are located in a plane perpendicular to the rotational axis of the screen carrier (3) as well as the mouths of their influx lines (11) and discharge lines (12) are formed at uniform distances along the circumference of the screen carrier (2).

**12.** The filtering apparatus of any one of Claims 1 to 11, **characterized in that** the mouths of the influx lines (11) and the discharge lines (12) are each located on a generatrix of the inner surface (13) of the screen carrier (12) and the distance between them along said generatrix is equal to the distance between the influx channel (9) and the discharge channel (10) along a generatrix of the core part (1).

**13.** The filtering apparatus of any one of Claims 1 to 12, **characterized in that** the housing (3) has the shape of a rotary-cylinderical ring.

**14.** The filtering apparatus of any one of Claims 1 to 13, **characterized in that** the circumferential section (U1) of the core part (1) and the housing (3) for replacing the filter arrangements (7) and the circumferential section (U2) of the core part (1) and the housing (3) for backwashing the filter arrangements (7) are located next to each other along the circumference of the core part (1) and the housing (3), respectively.

**15.** The filtering apparatus of any one of Claims 1 to 14, **characterized in that** by forming at least three screen cavities (6), the influx channel (9) and the discharge channel (10) extend over a central angle area (A) of the circumferential surface (8) of the core part (1), for which $360(n-2)/n > A > 360(n-3)/n$ applies, with n being the number of screen cavities (6) present.

**Revendications**

**1.** Dispositif de filtrage pour fluides, en particulier des matériaux synthétiques thermoplastiques, comprenant un support (2) de filtre présentant une face (41) extérieure cylindrique de révolution, qui est accueilli de façon rotatoire dans un évidement (5) cylindrique de révolution d'un boîtier (3) fixe adapté à sa circonférence et dans lequel le long de la circonférence est formé un nombre de filtres comportant des ensembles (7) de filtre, le support (2) de filtre comportant une partie (1) centrale cylindrique de révolution et étant disposé dans celle-ci de façon rotatoire, la partie (1) centrale et le boîtier (3) étant formés en face du support (2) de filtre rotatoire de façon fixe et anti-rotatoire, **caractérisé en ce que**
dans la face (8) de la partie (1) centrale sont formés ou creusés le canal (9) d'apport pour le fluide à filtrer et le canal (10) de décharge de fluide filtré, lesdits canaux s'étendant dans deux plans (EZ, EA) parallèles, perpendiculaires à l'axe de rotation de la partie (1) centrale, au moins le long d'une section circonférentielle, éventuellement le long de la circonférence entière, et **en ce que**
l'amenée (11) et la décharge (12) pour le fluide sont formés pour chacun des filtres (6) dans le support (2) de filtre, l'embouchure de l'amenée (11) étant disposée sur la surface (13) intérieure du support (2) de filtre dans le plan (EZ) du canal (9) d'apport et l'embouchure de la décharge (12) étant disposée sur la face (13) intérieure du support (2) de filtre dans le plan (EA) du canal (10) de décharge, de façon à pouvoir relier fluidiquement respectivement l'amenée (11) avec le canal (9) d'apport et la décharge (12) avec le canal (10) de décharge.

2. Dispositif de filtrage selon la revendication 1, **caractérisé en ce que** l'amenée (11) et la décharge (12) sont délimitées par la face de la paroi intérieure de l'évidement (5).

3. Dispositif de filtrage selon les revendications 1 ou 2, **caractérisé en ce que** l'amenée (11) dans le support (2) de filtre est conduite vers une zone (14) radialement extérieure des filtres (6) ou de l'assemblage (7) de filtre, pour que le fluide puisse couler à travers l'assemblage (7) de filtre radialement de l'extérieur vers l'intérieur.

4. Dispositif de filtrage selon une des revendications 1 à 3, **caractérisé en ce que** chacun des filtres (6) est formé par un évidement dans le support (2) de filtre, qui s'ouvre vers la face (15) extérieure du support (2) de filtre, les assemblages (7) de filtre étant insérés dans l'évidement depuis la face (15) extérieure et l'amenée (11) débouchant latéralement dans l'espace ou dans la zone (14) disposés entre l'assemblage (7) de filtre et la face (15) extérieure, et la décharge (12) partant de la zone radialement intérieure de l'évidement par rapport à l'assemblage (7) de filtre vers la partie (1) centrale.

5. Dispositif de filtrage selon une des revendications 1 à 4, **caractérisé en ce que** le canal (9) d'apport est raccordé avec un conduit d'alimentation (17) à travers au moins un conduit (17) de raccordement et **en ce que** le canal (10) de décharge est raccordé avec un conduit (16) d'accumulation à travers au moins un conduit (18) de raccordement, le conduit (39) d'alimentation et le conduit (16) d'accumulation étant avantageusement disposés ou inclus centriquement dans la partie (1) centrale depuis des faces opposés de la pièce (1) centrale.

6. Dispositif de filtrage selon une des revendications 1 à 5, **caractérisé en ce qu'**au moins dans une section (U1) circonférentielle du boîtier (3) est formé une ouverture (20) de prélèvement pouvant être fermée avec un couvercle (33) pour prélever un assemblage (7) de filtre présent dans un filtre (6), et **en ce qu'**au moins dans une section (U2) ultérieure du boîtier (3) est formé un conduit (37) de sortie pouvant être verrouillé avec une valve (38).

7. Dispositif de filtrage selon la revendication 6, **caractérisé en ce que**

- des sections (U1, U2) de la partie (2) centrale en face de l'ouverture (20) de prélèvement et/ou du conduit (37) de sortie et/ou de l'embouchure de l'amenée (11) et de la décharge (12) sont prives de sections du canal (9) d'amenée et/ou du canal (10) de décharge, ou **en ce que**
- un conduit (21) d'apport dérivé à partir du conduit (39) d'alimentation est prévu dans une zone (U1, U2) circonférentielle de la partie (2) centrale, la zone (U1, U2) circonférentielle étant prive du canal (9) d'amenée et/ou du canal (10) de décharge, ledit conduit d'apport étant guidé vers la surface (8) de la partie (1) centrale et pouvant être verrouillé ou déverrouillé avec une première valve (22), l'embouchure (23) dudit conduit d'apport étant disposée dans le plan (EZ) du canal (9) d'amenée et pouvant ainsi être raccordé à l'amenée, et **en ce que** dans la partie (1) centrale un conduit (25) de rinçage dérivant à partir du conduit (18) d'accumulation et pouvant être verrouillé ou déverrouillé avec une deuxième valve (24) est conduit vers la surface (8) de la partie (1) centrale, l'embouchure (26) du conduit (25) de rinçage est disposé dans le plan (EA) du canal (10) de décharge et pouvant ainsi être raccordé à la décharge (12) du reste (2) du filtre.

8. Dispositif de filtrage selon la revendication 8, **caractérisé en ce que** un conduit (27) de déviation est raccordé au conduit (25) de rinçage entre son embouchure (26) et la deuxième valve (24), qui est conduite vers une pompe (28) d'aspiration et de pression, de préférence une pompe à piston à réciprocation, l'espace (40) d'entraînement de la pompe (28) étant raccordé à un accumulateur (30) de matière pour fluide filtré, ledit accumulateur (30) est en communication avec le conduit (16) d'accumulation à travers le conduit (25) de rinçage et la valve (24).

9. Dispositif de filtrage selon la revendication 8, **caractérisé en ce que** le conduit (27) de déviation vers la pompe (28) d'aspiration et de pression et la deuxième valve (24) sont disposées dans une section (29) de la partie (1) centrale qui dépasse du boîtier (3) et du corps (2) de filtre.

10. Dispositif de filtrage selon une des revendications 1 à 9, **caractérisé en ce que** le support (2) de filtre est accueilli sur la partie (1) centrale et dans le boîtier de façon étanche au fluide.

**11.** Dispositif de filtrage selon une des revendications 1 à 10, **caractérisé en ce que** les filtres (6) disposés dans un plan perpendiculaire à l'axe de rotation du support (3) de filtre ainsi que les embouchures de leurs amenées (11) et décharges (12) sont uniformément espacées le long de la circonférence du support (3) de filtre.

**12.** Dispositif de filtrage selon une des revendications 1 à 11, **caractérisé en ce que** les embouchures des amenées (11) et des décharges (12) sont disposées respectivement sur une génératrice de la face (13) intérieure du support (2) de filtre et **en ce que** la distance entre eux le long de cette génératrice correspond à la distance entre le canal (9) d'apport et le canal (10) de décharge le long d'une génératrice de la partie (1) centrale.

**13.** Dispositif de filtrage selon une des revendications 1 à 12, **caractérisé en ce que** le boîtier (3) présente une forme cylindrique de révolution.

**14.** Dispositif de filtrage selon une des revendications 1 à 13, **caractérisé en ce que** la section (U1) circonférentielle de la partie (1) centrale et du boîtier (3) pour changer les assemblages (7) de filtre et la section (U2) circonférentielle de la partie (1) centrale et du boîtier (3) pour le rétrolavage les assemblages (7) de filtre sont disposées l'une à côté de l'autre le long de la circonférence de la partie (1) centrale ou du boîtier (3).

**15.** Dispositif de filtrage selon une des revendications 1 à 14, **caractérisé en ce que** dans le cas de la formation d'au moins sept filtres (6) le canal (9) d'amenée et le canal (10) de décharge s'étendent sur une zone (A) d'angle au centre de la surface (8) circonférentielle de la partie (1) centrale, correspondant à la formule suivante : $360(n-2)/n > A > 360(n-3)/n$, n correspondant au nombre de filtres (6) présents.

Fig. 2
Schnitt: A-A
Fig. 1
Schnitt: B-B

Fig. 4
Schnitt: A-A
D-D
Fig. 3
Schnitt: C-C
(45° gedreht dargestellt)

Fig. 6
Schnitt: A-A
D-D
10
5
28
Fig. 5
Schnitt: C-C
(45° gedreht dargestellt)
A
D
10
9
22
24
30
6
38

Fig. 8
Schnitt: A-A
Fig. 7
Schnitt: E-E
(90°gedreht dargestellt)

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 10151496 A1